# EUROPEAN PATENT APPLICATION

(11) **EP 4 349 173 A1**
(43) Date of publication of application: **10.04.2024**
(21) Application number: 22306493.2
(22) Date of filing: 05.10.2022
(51) Int. Cl.: A01N 65/08, A01N 65/20, A01P 13/02

(54) **BIOCONTROL LIQUID PRODUCT, PROCESS OF OBTENTION AND USES THEREOF**

(71) Applicant: Mas Seeds, 40280 Haut Mauco (FR); Institut national de recherche pour l'agriculture, l'alimentation et l'environnement, 75007 Paris (FR); Ecole D'ingenieurs De Purpan, 31300 Toulouse (FR)
(72) Inventor: SEASSAU, Célia, 31600 Saubens (FR); MUNOS, Stéphane, 31450 Deyme (FR); CHABAUD, Mireille, 31520 Ramonville Saint Agne (FR); AIT-KACI, Neila, 31400 Toulouse (FR)
(74) Representative: Regimbeau

(57) **Abstract**

The invention relates to a biocontrol liquid product consisting of a macerated aqueous extract obtained from cover crop plants of the *Brassicaceae* and/or *Fabaceae* families.

## Description

### FIELD OF THE INVENTION

The present invention concerns a biocontrol product and its use in biocontrol methods. In particular, this biocontrol product is used against *Orobanche cumana,* a sunflower plant parasite.

### BACKGROUND OF THE INVENTION

Control of pests and diseases in agriculture and horticulture is of primary importance. Plant pests include insects and parasites, in particular parasitic plants. With the development of specific parasitic organs called haustoria, parasitic plants penetrate the conductive system of the host plant and derive their nutritional requirement from the host.

Until recently, chemical compounds were applied to the soil to control the infestation of plants of interest by plant parasites, with resulting toxicity problems.

Another way of control is called biocontrol, which corresponds to plant protection methods based on the use of natural mechanisms. Biocontrol is based on the mechanisms and interactions that govern the relationships between species in the natural environment. Thus, the principle of biocontrol is based on the management of the balance of pest populations rather than on their eradication. These methods reduce the dependency on synthetic compounds, and are more environmentally friendly.

Among these biocontrol methods, biofumigation is defined as a soil treatment, performed in the aim to control soilborne pests, based on the use of plants that produce inhibitory chemicals. In most cases, these so-called "biofumigant plants" or "plants with biofumigation power" are chopped and incorporated into the soil, where they release their inhibitory chemicals (Kirkegaard et al., 1993).

Biofumigation is achieved by incorporating fresh plant material (green manure), seed meals (a by-product of seed crushing for oil), or dried plant material (Kirkegaard et al., 1993; Matthiessen and Kirkegaard, 2006; Michel, 2014).

Plants from the *Brassicaceae* family have been successfully used in biofumigation methods; indeed, most of them present high rates of glucosinolates into their tissues (aerial and roots) (Kirkegaard and Sarwar, 1999).

The patent application US 2008/0182751 relates to *Brassicaceae* plant material and its use as biopesticide. The plant material is issued from leaves, stems, roots and seeds, and is notably seed meal. The plant material is applied to soil prior or simultaneously to crop planting, or subsequently to plant emergence.

The international application WO 2012/083446 refers to mustard plants, for the control of pests. Biocontrol formulations consist of mixtures of plant material, preferably seed meal, from *Sinapsis alba* (white mustard) and *Brassica juncea* (brown mustard), said mixture comprising an effective amount of a glucosinolate breakdown product.

Glucosinolates (GSLs) are secondary metabolites produced by plants belonging to the *Capparales* order. All plants which produce glucosinolates also produce the enzyme myrosinase, physically separated from the glucosinolates in the intact plant tissue (Brown and Morra, 1997). Upon tissue disruption, the myrosinase hydrolyze glucosinolates, in particular into isothiocyanates, but also in other hydrolysis compounds (thiocynates, nitriles, ...) that are also active against pests (Brown and Morra, 1997).

It has been established that high isothiocyanate concentrations must be present in the soil for an efficient biofumigation strategy. However, it is highly probable that non-glucosinate derived compounds also contribute to pest biocontrol (Gimsing & Kirkegaard, 2009).

Glucosinolates are classified into three profiles: aliphatic, aromatic and indolyl, which differs in the length and weight of their side chain, and thus, in proprieties such as volatility and persistence in the soil (Brown and Morra, 1997; US 2006/0127996).

Isothiocyanates (ITCs) are highly volatile, especially aliphatic ITCs (Sarwar et al., 1998).

In soil after incorporation of ground *Brassicaceae,* the concentration in GSLs and ITCs would be highest during the first 30 minutes, and could be detected up to 12 days after incorporation (Gimsing and Kirkegaard, 2006).

### Orobanche, a sunflower parasite

*Orobanche cumana,* also designated as sunflower broomrape, is a parasitic plant of cultivated sunflower (*Helianthus annuus*). It has affected sunflowers since the early 20th century in Eastern Europe. It is a host specific, obligatory, non-photosynthetic root parasite. *O*. *cumana* produces a large number of small, inconspicuous seeds which can remain viable for more than 10 years. The seeds are readily dispersed naturally by water and agricultural practices (Jestin and Martin-Monjaret, 2016).

Germination of *O*. *cumana* depends on a chemical stimulus from the sunflower root (Delavault, 2015). From the seed, the radicle emerges and can grow only a few millimeters long, needing to establish a connection to a host root within a few days of germination (Fernández-Aparicio et al., 2016; Parker and Riches, 1993). Germination also requires a moist environment together with suitable temperatures. Then, *O*. *cumana* develops into a tubercle on the surface of the sunflower root. After several weeks, the tubercles develop into flowering shoots which emerge above the soil (Duca et al., 2013).

*O. cumana* can cause immense damage to cultivated sunflowers, since it consumes nutriments (sugars and nitrogen compounds) directly from the phloem of the host, and also draws most of the water from the host xylem (Grenz et al., 2008; Labrousse et al., 2001).

In terms of control of infestation, the shoots of *O. cumana* can be hand-pulled, but the benefit is limited, and often too late as most of the damage will already have been done.

Among the chemical products developed for the control of *O. cumana,* one can cite imazethapyr, imazapyr, chlorsulfuron and their mixtures, that have been successfully used as pre-emergence or post-emergence herbicides. Other herbicides such as trifluralin and oxyfluorfen have also proved their efficacity.

Nevertheless, control of *O. cumana* in cultivated *H. annuus* is largely based on using resistant cultivars (Molinero-Ruiz et al., 2015). However, despite resistant sunflower varieties being developed, more virulent races of *O. cumana* have repeatedly evolved, to overcome resistance.

In the search of biological control means, the team of Dr Strelnikov have described the use of grinded green mass, from white, black and common mustard, and from winter rape, to control broomrape infection of sunflower plants (Strelnikov *et al.,* 2020). Results show that the presence of this green mass in a soil containing *O. cumana* seeds significantly reduces the level of infection of sunflower plants by *O. cumana.* This green mass would act on *O. cumana* seeds by both inhibiting germination and growth.

While this is a promising lead, its implementation in farming is challenging. Two main problems emerge: (i) the important volume of the green biomass that is needed, and (ii) the conservation of fresh green biomass over time.

For the biocontrol of sunflower fields, huge volumes of grinded green mass would be necessary. It is estimated that about at least 0.5 ton of dry matter would be necessary for the treatment of one hectare of field. So, either the farmers shall use a part of their lands to cultivate cover crop plants, to be used locally; either the farmers shall acquire and carry the necessary volume of green mass from other farms. In both cases, the supplementary costs linked to transport or reduction of cultivated surfaces might limit the development of this biocontrol method.

Regarding the conservation of fresh green biomass over time, as mentioned above, biofumigation methods are based on the hydrolysis into the soil of glucosinolates contained into the green biomass. It is therefore of great importance that these glucosinolates and/or derived compounds be preserved, between the harvesting of crop plants and their use in a biocontrol method.

Based on these facts, to promote farmers' access to an efficient biocontrol method, it is desirable to dispose of a biocontrol product that is both transportable and stable over time. The present invention answers these needs.

### SUMMARY OF THE INVENTION

The present invention concerns a biocontrol liquid product consisting of a macerated aqueous extract obtained from cover crop plants of the *Brassicaceae* and/or *Fabaceae* families.

The present invention also relates to a process for obtaining a macerated aqueous extract as mentioned above, comprising the following steps:
a) grinding the harvested plants,
b) macerating said grinded material into water for a time period of at least 24 hours, at a temperature comprised between 20°C and 30°C, and
c) removing the solid parts of plants.

The present invention also concerns the use of a biocontrol liquid product as described above, or as obtained by the process as described above, in a biocontrol method.

Finally, the present invention also relates to a biocontrol method for the control of *Orobanche cumana* parasitizing on sunflower, comprising the spreading onto the field's soil of a biocontrol liquid product as defined above, or as obtained by the process as defined above.

### BRIEF DESCRIPTION OF THE FIGURES

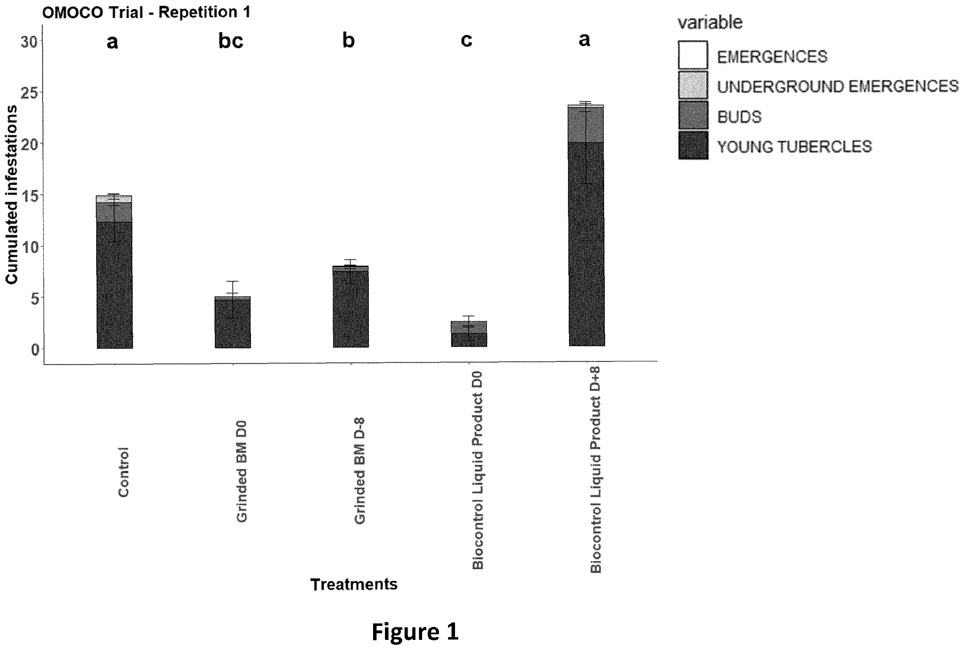

### Figure 1. Cumulated infestations of sunflower plants (sensitive lineage XRQ) by O. cumana, in 200 ml sand and soil substrate in growth chamber.

For each condition, infestations of the young tubercles (in black), of the buds (in medium grey), of the underground emergences (in light grey) and of the emergences (in white) have been counted at Day 43 post-seeding; except for D-8 conditions: counting at Day 36 post-seeding.

The following treatments have been tested:
- Control (no treatment)
- Grinded Brown Mustard (BM) D0: grinded fresh brown mustard (equivalent 4 tons of dry matter per hectare) is applied to the substrate at Day 0, i.e., the day of seeding.
- Grinded BM D-8: grinded fresh brown mustard (equivalent 4 tons of dry matter per hectare) is applied to the substrate at Day -8, i.e., 8 days before seeding.
- Biocontrol Liquid Product D0: 40 ml of macerated aqueous extract of brown mustard is applied to the substrate at Day 0, i.e., the day of seeding.
- Biocontrol Liquid Product D+8: 40 ml of macerated aqueous extract of brown mustard is applied to the substrate at Day 8, i.e., 8 days after seeding.

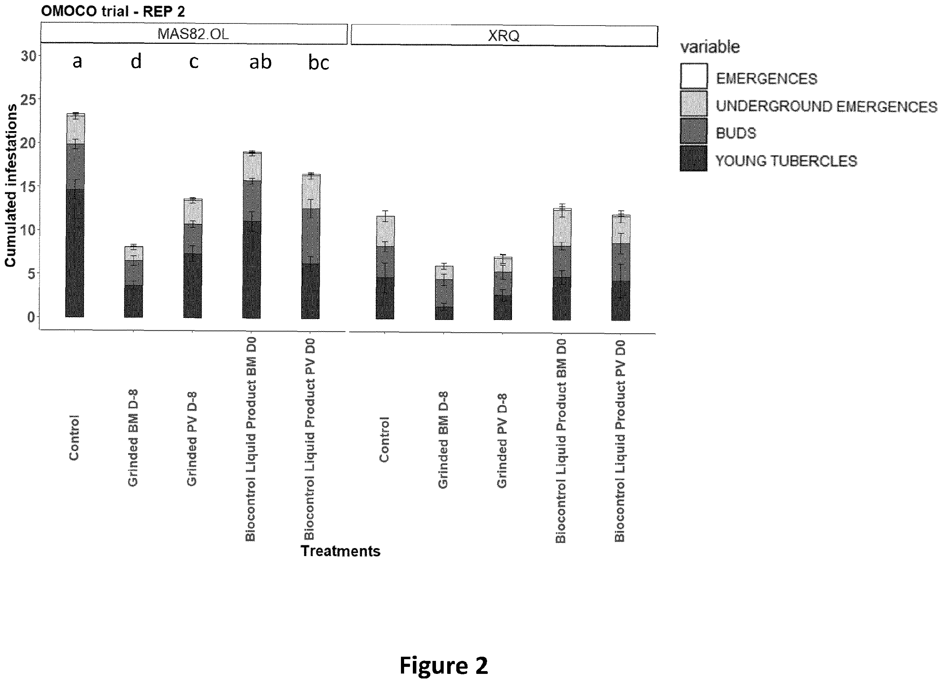

### Figure 2. Cumulated infestations of sunflower plants (sensible hybrid MAS 82.OL and sensitive lineage XRQ) by O. cumana, in 200 ml sand and soil substrate in growth chamber.

For each condition, infestations of the young tubercles (in black), of the buds (in medium grey), of the underground emergences (in light grey) and of the emergences (in white) have been counted at Day 43 post-seeding; except for D-8 conditions: counting at Day 36 post-seeding.

Two sunflower plants are used: MAS 82.OL (on the left) and XRQ (on the right).

The following treatments have been tested:
- Control (no treatment)
- Grinded brown mustard (BM) D-8: grinded fresh brown mustard (equivalent 4 tons of dry matter per hectare) is applied to the substrate at Day -8, i.e., 8 days before seeding.
- Grinded purple vetch (PV) D-8: grinded fresh purple Vetch (equivalent 4 tons of dry matter per hectare) is applied to the substrate at Day -8, i.e., 8 days before seeding.
- Biocontrol Liquid Product BM D0: 40 ml of macerated aqueous extract of brown mustard is applied to the substrate at Day 0, i.e., the day of seeding.
- Biocontrol Liquid Product PV D0: 40 ml of macerated aqueous extract of purple vetch is applied to the substrate at Day 0, i.e., the day of seeding.

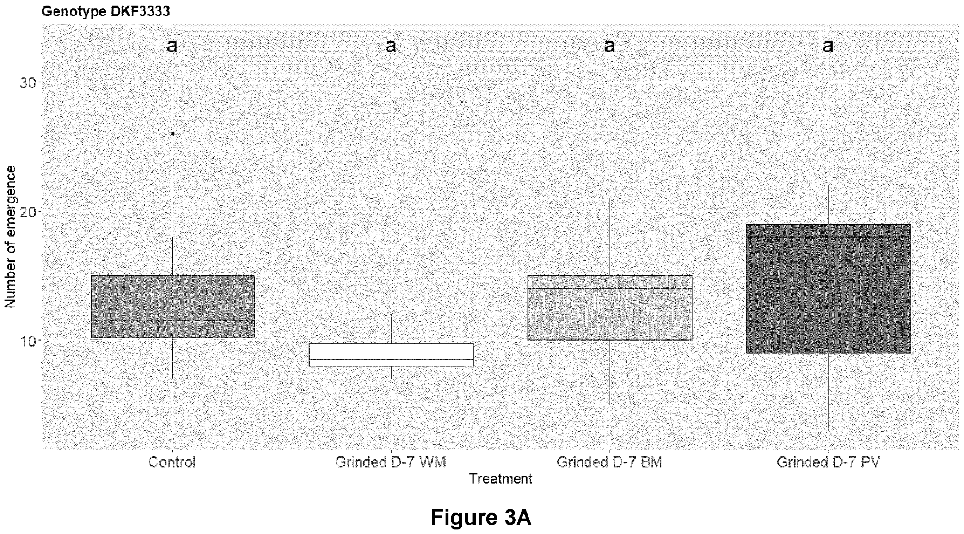

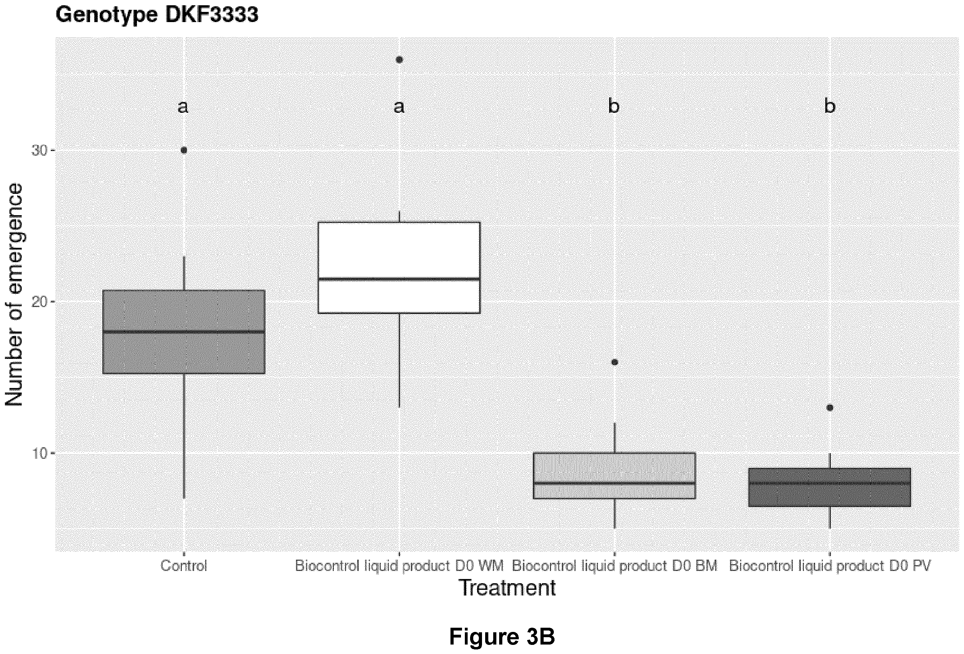

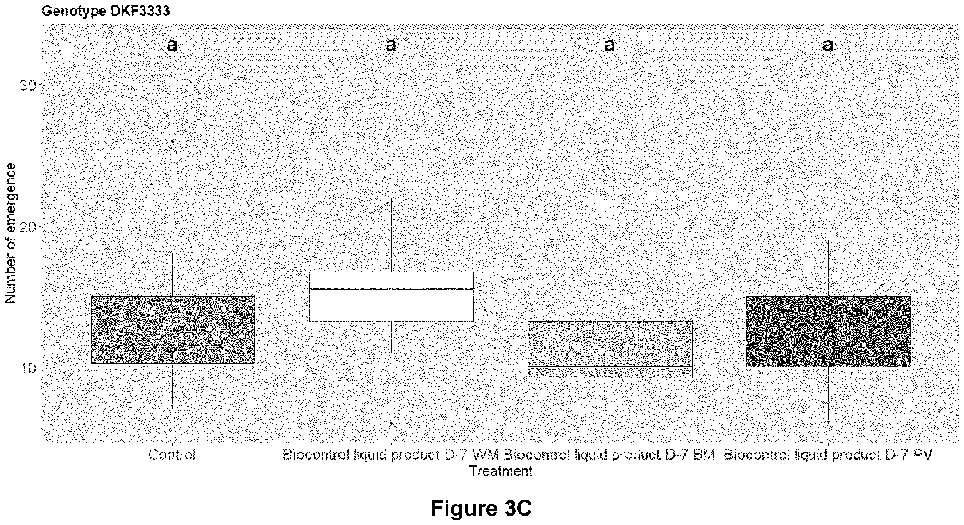

### Figure 3. Greenhouse experiments - Number of emergences of O. cumana at Day 98 post-seeding, with or without treatment in 3 L pots containing potting soil.

**3A)** Treatments consist of grinded fresh material: WM (white mustard), BM (brown mustard), or PV (purple vetch). Extracts are applied onto the substrate at D-7 (7 days before sowing sunflower seeds). Control designates untreated conditions.
**3B)** Treatments consist of macerated aqueous extracts (Biocontrol liquid product) from: WM (white mustard), BM (brown mustard), or PV (purple vetch). Extracts are applied onto the substrate at Day 0 (day of seeding). Control designates untreated conditions.
3C) Treatments consist of macerated aqueous extracts (Biocontrol liquid product) from: WM (white mustard), BM (brown mustard), or PV (purple vetch). Extracts are applied onto the substrate at Day-7 (7 days before seeding) and at Day 0 (day of seeding). Control designates untreated conditions.

### DETAILED DESCRIPTION OF EMBODIMENTS OF THE INVENTION

Unless stated otherwise, the following terms and phrases as used herein are intended to have the following meanings.

Cover crop plants are plants that used for other purposes than being harvested, for example to cover the soil in order to manage soil fertility and quality. They may also be planted to be used in biocontrol methods against pests and diseases.

Among usual cover crop plants, the *Brassicaceae* or *Fabaceae* families are well known by the person in the art, and currently used for these purposes.

*Brassicaceae,* previously designated as *Cruciferae,* is an economically important family of flowering plants, including about 3200 species and in particular the mustards, rapeseed and the cabbages.

*Fabaceae,* also designated as *Leguminosae,* is an agriculturally important family of flowering plants, including about 20 000 species and in particular *Glycine max, Phaseolus, Pisum sativum, Cicer arietinum, Medicago sativa, Arachis hypogaea and Vicia Faba.* It also includes purple vetch, also called Bengal vetch (*Vicia benghalensis*).

The present invention relates to a biocontrol liquid product consisting of a macerated aqueous extract obtained from cover crop plants of the *Brassicaceae* and/or *Fabaceae* families.

In the sense of the invention, the term "biocontrol method" designates a method of controlling pests such as insects, parasites and plant diseases, by using other living organisms, and in particular plants and extracts thereof. Usually, a biocontrol method does not allow the complete eradication of pests, but rather inhibits or slows down the growth of these pests, therefore allowing the cultivated species to better resist to the infestation.

In the sense of the invention, the term "biocontrol product" designates a product obtained from specific plants, that is used in a biocontrol method.

The phrase "biocontrol liquid product" means that this product is under a liquid form, and can be carried in bottles, drums or barrels.

In the sense of the invention, a "macerated aqueous extract" designates an aqueous extract obtained from soaking pieces of plants into water during a certain amount of time. During this soaking step, the biocide compounds contained in the plants diffuse into the water. The pieces of plants are then removed, for example by centrifugation or filtration, and the macerated aqueous extract is conserved in appropriate conditions.

The phrase "obtained from cover crop plants of the *Brassicaceae* and/or *Fabaceae* families" indicates that the macerated aqueous extract is obtained from harvested and grinded plant parts of at least one specie of the *Brassicaceae* and/or *Fabaceae* families.

In an embodiment of the invention, the biocontrol liquid product is obtained from specific species of the *Brassicaceae* family, such as:
- plants of the *Brassica* genus, including brown mustard (*Brassica juncea*), black mustard (*Brassica nigra*), Ethiopan mustard (*Brassica carinata*) and rapeseed *(Brassica napus);*
- plants of the *Sinapsis* genus, including white mustard (*Sinapis alba*) and wild mustard (*Sinapsis arvensis*);
- and mixtures thereof.

In an embodiment of the invention, the biocontrol liquid product is obtained from specific species of the *Fabaceae* family, such as:
- Plants of the *Vicia* genus, including Hungarian vetch (*Vicia pannonica*) and Bengal vetch (*Vicia benghalensis*) also designated as purple vetch;
- Plants of the *Medicago* genus, including alfalfa (*Medicago sativa*),
- And mixtures thereof.

In another embodiment, the biocontrol liquid product consists of a macerated aqueous extract obtained from a mixture of at least two species from the *Brassicaceae* family and/or the *Fabaceae* family.

Preferred species used to generate the macerated aqueous extract are the following:
- brown mustard (*Brassica juncea*), and/or
- purple/Bengal vetch (*Vicia benghalensis*).

In an embodiment of the invention, the biocontrol liquid product consists of a macerated aqueous extract obtained from brown mustard.

In an embodiment of the invention, the biocontrol liquid product consists of a macerated aqueous extract obtained from purple vetch.

In an embodiment of the invention, the biocontrol liquid product consists of a macerated aqueous extract obtained from brown mustard and purple vetch.

These plant species used to generate the macerated aqueous extract are harvested according to the general knowledge of the person of the art. In particular, aerial parts (buds, flowers, leaves and stems) are harvested. Alternatively, tubercles or roots may also be harvested with aerial parts.

In a specific embodiment of the invention, these plant species are harvested at flowering stage, when plants begin to produce buds, and then grinded.

Indeed, GSLs concentration peaks at the early flowering stage in the whole plant; then it starts to decrease in shoots and roots and to increase in the seeds, whose GSLs concentration peaks at maturity (Booth *et al.,* 1991; Sarwar and Kirkegaard, 1998).

Because seeds have much less biomass than shoots and roots, which decreases the amount of biomass available for biofumigation (Morris *et al.,* 2020), the optimal timing for harvesting in view of a biofumigation use is at the maximum value of biomass GSLs concentration (Matthiessen and Kirkegaard, 2006).

### Process of preparation of a macerated aqueous extract from cover crop plants of the Brassicaceae and/or Fabaceae families.

The present invention also concerns a process for obtaining a macerated aqueous extract as described above, comprising the following steps:
a) grinding the harvested plants,
b) macerating said grinded material into water for a time period of at least 24 hours, at a temperature comprised between 20°C and 30°C, and
c) removing the solid parts of plants.

The grinding step (a) is performed according to the general knowledge of the person of the art, in particular by the action of a grinder, a crusher, a shredder or a mill.

In a preferred embodiment of the invention, the step (a) leads to grinded material consisting essentially of particles of length comprised between 1 and 10 centimeters, or preferably comprised between 1 and 7 centimeters, or better comprised between 2 and 4 centimeters.

Advantageously, the grinded material consists essentially of particles having a length inferior to 10, 9, 8, 7, 6, 5, 4, or 3 centimeters, preferably having a length inferior to 3 centimeters.

The step (b) of maceration of this grinded plant material into the water is performed for a sufficient amount of time, under appropriate conditions.

In particular, the grinded plant material is mixed with water in appropriate proportions. These proportions are comprised between 10 to 5 000 grams of grinded plant material for one Liter of water, more specifically are comprised between 10 to 1 000 grams for one Liter, more specifically are comprised between 50 to 500 grams for one Liter of water. According to a specific example, 200 grams of grinded plant material are mixed with 1 Liter of water.

The "appropriate conditions" refer in particular to the temperature, that is ideally comprised between 22°C and 26°C, and is preferentially of about 24 °C.

The "sufficient amount of time" is of at least 24 hours. In particular, this maceration step lasts at least 24, 36, 48, 60, 64, 68 or 72 hours. In particular, the time period of maceration is comprised between 24 and 72 hours. In particular, the time period of maceration is of about 24, 36, 48, 60, 64, 68 or 72 hours. In a specific embodiment, the time period is of about 64 hours.

The person of the art knows other appropriate conditions for macerating the grinded plant material, in particular with agitation or not, protected from light or not, etc.

The step (c) consists of the removal of the grinded plant material, for example by filtration or centrifugation, and the collect of the macerated aqueous extract.

The macerated aqueous extract is then distributed in bottles or barrels. Advantageously, it may be used extemporaneously.

### Use of a biocontrol liquid product according to the invention

The present invention also relates to the use of a biocontrol liquid product as described above, or as obtained by the process as described above, in a biocontrol method.

Advantageously, this biocontrol liquid product can be preserved and/or transported easily before its use in fields.

The biocontrol method comprises the spreading, into a field, of this biocontrol product, for inhibiting the growth or infestation of pests, in particular insects, pathogenic fungi, and parasitic plants.

The person of the art would know how to adjust the quantity to be applied to the type of pests to be controlled. The person of the art is also able to determine the best timing for the spreading of the biocontrol product: before, after or during the sowing of cultivated plants.

In a specific embodiment of the invention, the biocontrol method is intended for the biocontrol of parasitic plants of sunflower, such as broomrape.

In a more specific embodiment of the invention, this biocontrol method is intended for the biocontrol of broomrape (*Orobanche cumana*) parasitizing on sunflower.

### Biocontrol method according to the invention

The present invention also relates to a biocontrol method for the control of *Orobanche cumana* parasitizing on sunflower, comprising the spreading onto the field's soil of a biocontrol liquid product as described above, or as obtained by the process defined above.

This spreading onto the field's soil is performed according to the knowledge of the person of the art.

In a specific embodiment, the biocontrol liquid product is spread onto the field's soil before or at the same time than the sowing of sunflower seeds.

### EXAMPLES

Although the present invention herein has been described with reference to particular embodiments, it is to be understood that these embodiments are merely illustrative of the principles and applications of the present invention. It is therefore to be understood that numerous modifications may be made to the illustrative embodiments and that other arrangements may be devised without departing from the spirit and scope of the present invention as defined by the appended claims.

### Example 1. 60-well culture plates tests on broomrape attachment

The protocol is described below. The experiment has been performed on 12 plants. In this assay, a sensitive variety of sunflower "TNS" was used.

The following formulations of fresh brown mustard (BM) from the Etamine variety, collected at flowering period, have been prepared:
- Grinded BM: grinded fresh brown mustard (equivalent 4 tons of dry matter per hectare) is prepared by grinding the plant material: 7.7 g of fresh green mass were added in pots containing 200 ml of substrate.
- Biocontrol liquid product is obtained by macerating 200 g of fresh green mass of BM into 1 Liter of water, at 24°C for 64 hours. The extract is then filtered in a strainer and 40 ml were added in pots containing 200 ml of substrate.

Both formulations are mixed into 200 ml of substrate, made of sand and potting soil (9 L of soil and 3 L of sand, mixed in concrete mixer for 15 minutes).

1.5 g of *O*. *cumana* (Bourret 2020) seeds are added into the mix and incubated with:
- no treatment (control)
- grinded fresh brown mustard (BM) added at Day 0 (day of seeding of TNS);
- grinded fresh brown mustard (BM) added at Day -8 (8 days before seeding of TNS);
- 40 ml of macerated aqueous extract of brown mustard added at Day 0, i.e., the day of seeding of TNS.
- 40 ml of macerated aqueous extract of brown mustard added at Day 8, i.e., 8 days after seeding of TNS.

After burial of the formulations, 15 ml of water is added to promote the hydrolysis of glucosinolates into isothiocyanates and other degradation products. The sunflower achenes used in this trial were directly sown, without any pre-conditioning.

An additional 15 ml of water was added to the treatments with shreds, and 25 ml of water was added to the controls. The reduced amounts applied to the shreds were due to the fact that the shreds themselves have an intrinsic moisture content. Nevertheless, the watering of the cups is a critical parameter of the trial, as it can lead to leaching of the seeds to the bottom or disturb the germination of Orobanche seeds, which are sensitive to moisture variations.

For each condition, infestations of the young tubercles, of the buds, of the underground emergences and of the emergences of broomrape have been counted at Day 43 post-seeding; except for D-8 conditions, wherein the counting is performed at Day 36 post-seeding.

Results are presented in figure 1. A significant reduction (p < 0.01) of young tubercles, buds, underground emergences, and emergences of *O. cumana* on sunflowers was observed after the treatments with grinded brown mustard added at Day 0 (grinded BM D0), grinded brown mustard added at Day -8 (grinded BM D-8), and with macerated aqueous extract of brown mustard added at Day 0 (biocontrol liquid product D0), in comparison with the control where no brassica was added.

The treatment with the biocontrol liquid product D0 was the most efficient to reduce *O*. *cumana,* all stages combined.

The treatment with the biocontrol liquid product added at Day 8 did not differ significantly from the control.

These results show that the macerated aqueous extract (Biocontrol liquid product) is effective to reduce *O*. *cumana* when applied at sunflower seeding.

### Example 2. Cumulated infestations of sunflower plants (sensitive lineage XRQ and sensible hybrid MAS 82.OL) by O. cumana

These tests have been performed in 200 ml of a sand and soil substrate.

Two sunflower varieties were used: 25 plants of MAS 82.OL (sensitive hybrid) and 11 plants of XRQ (sensitive line) sunflower.

The used variety of *O. cumana* was RCO 2014.

The following treatments have been tested:
- no treatment (control);
- grinded fresh brown mustard (BM) added at Day -8 (8 days before seeding of TNS);
- grinded fresh purple vetch (PV) added at Day -8 (8 days before seeding of TNS);
- 40 ml of macerated aqueous extract of brown mustard (BM) added at Day 0;
- 40 ml of macerated aqueous extract of Purple Vetch (PV) added at Day 0.

For each condition, infestations of the young tubercles (in black), of the buds (in medium grey), of the underground emergences (in light grey) and of the emergences (in white) have been counted at Day 42 post-seeding; except for D-8 conditions: counting at Day 36 post-seeding.

Results are presented in figure 2.

With the hybrid MAS82.OL, a significant reduction (p < 0.01) of young tubercles, buds, underground emergences, and emergences of *O. cumana* on sunflowers was observed after the treatments with grinded brown mustard added at Day -8 (grinded BM D-8), grinded purple vetch added at Day -8 (grinded PV D-8), and with macerated aqueous extract of purple vetch added at Day 0 (biocontrol liquid product PV D0), in comparison with the control where no brassica was added.

These results show that the macerated aqueous extract (biocontrol liquid product) is effective to reduce *O*. *cumana* infestation on MAS 82.OL. Only the treatment with the biocontrol liquid product from brown mustard added at Day 0 did not induce any significant difference from the control plants.

With the sunflower line XRQ, no significant reduction of *O*. *cumana,* all stages combined, was observed after treatments with grinded tissues or biocontrol liquid product, in comparison with the control; this might be explained by the smaller sample size (n=11 for XRQ and n=25 for MAS 82.OL), and the low level of infestation in the controls.

### Example 3. Greenhouse experiments

The crop plants used in this trial (see table 1) were taken in a field in the southwest of Toulouse (43.539 N, 1.489 E).

**Table 1. Summary table of biological material used in the greenhouse trial to evaluate the effects of Brassicaceae or Fabaceae on sunflower Orobanche emergence**

| *Orobanche cumana* | Bourret 2021 |
|---|---|
| Varieties of *Brassicaceae* | • Brown mustard var. Etamine (collected at flowering stage on 04/01 /2022) |
| | • White mustard var. Abraham (collected at flowering stage on 16/12/2021) |
| | • Purple vetch var. Titane (collected at flowering stage on 16/12/2021) |
| Varieties of Sunflower | Sensitive hydrid DKF3333 provided by Syngenta - 10 plants were tested |

**Table 2. Quantity of fresh green biomass incorporated into buckets**

| **Crop plant** | Humidy of sample (%) | Quantity of shredded material equivalent to 4 tons Dry Matter.ha⁻¹ (g) |
|---|---|---|
| Brown Mustard | 83.7 | 12 |
| White Mustard | 78.4 | 9 |
| Purple Vetch | 88.7 | 17 |

### Treatment with fresh grinded plant material

The quantities indicated in table 2 of grinded plants are buried in cups containing 160 ml of substrate inoculated with Bourret 2021 *O. cumana* seeds: 1.5 g of Orobanche seeds from the Bourret 2021 population for 3L of sand and 9L of potting soil, which were mixed manually in trays.

After burial, an addition of water of 15 ml is carried out, in order to support the hydrolysis of glucosinolates in isothiocyanates and other products of degradation. The cups are placed in plates covered with lids and stored in a culture chamber at 22°C for 7 days, before sowing the sunflower.

### Sunflower seeds

The sunflower achenes used in this trial were germinated in petri dishes in filter paper soaked with water. Seeds were treated with the active ingredient Fluodioxonil 0.2 L/quintal (soaked for 4h). The seeds were stored for three days in the dark at 22°C. They were then recovered and the seeds having developed a hypocotyl were sown in cups already containing the inoculated substrate and the residues of crushes which were buried 7 days earlier. An additional 15 ml of water was added to the treatments with shreds, and 25 ml of water was added to the controls. The reduced amounts applied to the shreds was due to the fact that the shreds themselves have an intrinsic moisture content. Nevertheless, watering the buckets is a critical parameter of the trial, as it may cause the seeds to sink to the bottom or disturb the germination of Orobanche seeds, which are sensitive to moisture variations.

### Treatment with biocontrol liquid product

Two treatments were tested with biocontrol liquid.

The first treatment consisted of a single dose of biocontrol liquid applied on the day of sowing (D0), while the second treatment consisted of an additional dose, applied 7 days before sunflower sowing (D-7/D0), corresponding to the conditioning period of *O. cumana* seeds.
a) First treatment (D0): The same day of sunflower seeding (D0), 25 ml of the macerated aqueous extracts were added to cups containing 160 ml of substrate inoculated with Bourret 2021 *O. Cumana* seeds. These cups did not contain any grinded material
b) Second treatment (D-7/D0): Two doses of the macerated aqueous extracts were added to cups containing 160 ml of substrate inoculated with Bourret 2021 *O. Cumana* seeds. The first dose was applied 7 days before sunflower seeding (D-7), and the second dose the same day of sunflower seeding (D0). The macerated aqueous extracts were added to cups that do not contain any grinded material. The quantity of the macerated aqueous extracts was 25 ml each time.
c) For the first treatment (D0), the same control than the one with the grinded material was used, and for the second treatment (D-7/D0), 25 ml of water were added at D-7 and 25 ml at D0 per cups as a control.

The seeded cups were kept in a growth chamber at 22°C and 60 % humidity for 18 days, in order to favor the emergence of sunflowers. These 18 days without disturbance allow a prolonged release and action of isothiocyanates.

Nine days after the transfer to the greenhouse of the experimental station, when the sunflowers were at the 2 leaves pair stage, the contents of each bucket are transferred into 3l pots filled with potting soil. Once repotted, the pots were watered by a drip system at a rate of 0.33 l twice a day, three times a week.

Symptoms of powdery mildew required a treatment with sulfur, and a nitrogen fertilization was carried out with a contribution of 20 g.10m-² of triturated sulfur ventilated at 97.5 %.

The first emergences of Orobanche were observed one month after potting.

A weekly count of emergences was then carried out, accompanied by measurements of the height of the sunflower plants. The counts were made until a plateau in the number of emergences was reached. In all, these counts were made on 7 dates, from 57 days after sowing to 98 days after sowing.

Results are shown in figures 3A, 3B and 3C, which show the number of emergences of *O. cumana* from Day 57 to Day 98 post-seeding, with different treatments:
**3A)** Treatment consists of grinded fresh material, buried 7 days before seeding (D-7): WM (white mustard), BM (brown mustard), or PV (purple vetch).
**3B)** Treatment consists of macerated aqueous extracts from: WM (white mustard), BM (brown mustard), or PV (purple vetch), added on the day of seeding.
**3C)** Treatment consists of macerated aqueous extracts from: WM (white mustard), BM (brown mustard), or PV (purple vetch), added 7 days before seeding and the day of seeding.

Analysis was performed with the Rstudio software version 4.0.5, using the kruskal function of the Agricolae package.

In the figure 3A, the final number of emergences of *O. cumana* on sunflower hybrid DKF3333 at 98 days post-seeding was not significantly different according to the treatment with grinded white mustard, brown mustard, or purple vetch, in comparison with the control.

In the Figure 3B, the final number of emergences of *O. cumana* was significantly (p<0.01) reduced by half after the treatments where biocontrol liquid product of brown mustard or purple vetch added at Day 0, in comparison with the control. No significant reduction of the final number of emergences of *O. cumana* were observed after biocontrol liquid product with white mustard added at Day 0, compared to the control. These results show that the macerated aqueous extract with brown mustard or purple vetch is effective to reduce *O. cumana* when applied at sunflower seeding.

In the Figure 3C, the two applications of biocontrol liquid product with white mustard, brown mustard or purple vetch, added 7 days before seeding and the day of seeding, did not significantly reduce the number of emergences of *O. cumana,* in comparison with the control. The lack of significant regulation of *O. cumana* in this experiment carried out in 3L pots filled with potting soil could be explained by the richness of the potting soil in organic matter, which is known to strongly adsorb ITCs (Neubauer et al., 2015). In agricultural fields, this problem will not arise because the average organic matter content is of about 3%, whereas it is of about 50% in potting soil.

### REFERENCES

### PATENTS

WO 2012/083446
US 2008/0182751
US 2006/0127996A1

### SCIENTIFIC PUBLICATIONS

Booth, E.J., Walker, K.C., Griffiths, D.W., 1991. A time-course study of the effect of sulphur on glucosinolates in oilseed rape (Brassica napus) from the vegetative stage to maturity. J. Sci. Food Agric. 56, 479-493. https://doi.org/10.1002/jsfa.2740560408
Brown PD, Morra MJ. 1997. Control of soil-borne plant pests using glucosinolate containing plants. Adv Agron 61: 167-231.
Delavault, P. (2015). Knowing the parasite: biology and genetics of Orobanche. Helia, 38(62), 15-29.
Duca, M., Glijin, A., & Acciu, A. (2013). The biological cycle of sunflower broomrape. J Plant Dev, 20, 71-78.
Fernández-Aparicio, M., Reboud, X., & Gibot-Leclerc, S. (2016). Broomrape weeds. Underground mechanisms of parasitism and associated strategies for their control: a review. Frontiers in plant science, 7, 135.
Gimsing, A.L., Kirkegaard, J.A., 2006. Glucosinolate and isothiocyanate concentration in soil following incorporation of Brassica biofumigants. Soil Biology and Biochemistry 38, 2255-2264.
Grenz, J. H., I 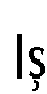 toc, V. A., Manschadi, A. M., & Sauerborn, J. (2008). Interactions of sunflower (Helianthus annuus) and sunflower broomrape (Orobanche cumana) as affected by sowing date, resource supply and infestation level. Field crops research, 107(2), 170-179.
Jestin, C., Martin-Monjaret, C., 2016. Orobanche cumana : opter pour la bonne stratégie de lutte Perspectives agricoles 430, 28-31.
Kirkegaard, J. A., Gardner, P. A., Desmarchelier, J. M., & Angus, J. F. (1993). Biofumigation: using Brassica species to control pests and diseases in horticulture and agriculture.
Kirkegaard, J. A., Gardner, P. A., Desmarchelier, J. M., & Angus, J. F. (1993). Biofumigation: using Brassica species to control pests and diseases in horticulture and agriculture.
Labrousse, P., Arnaud, M. C., Serieys, H., Bervillé, A., & Thalouarn, P. (2001). Several mechanisms are involved in resistance of Helianthus to Orobanche cumana Wallr. Annals of Botany, 88(5), 859-868.
Matthiessen, J.N., Kirkegaard, J.A., 2006. Biofumigation and Enhanced Biodegradation: Opportunity and Challenge in Soilborne Pest and Disease Management. Critical Reviews in Plant Sciences 25, 235-265.
Molinero-Ruiz L, Delavault P, Pérez-Vich B, Pacureanu-Joita M, Bulos M, Altieri E, Domínguez J, 2015. History of the race structure of Orobanche cumana and the breeding of sunflower for resistance to this parasitic weed: a review. Spanish Journal of Agricultural Research, 13(4):e10R01.
Morris, E.K., Fletcher, R., Veresoglou, S.D., 2020. Effective methods of biofumigation: a meta-analysis. Plant Soil 446, 379-392.
Neubauer, C., Hüntemann, K., Heitmann, B., & Müller, C. (2015). Suppression of Verticillium dahliae by glucosinolate-containing seed meal amendments. European journal of plant pathology, 142(2), 239-249.
Parker, C., & Riches, C. R. (1993). Parasitic weeds of the world: biology and control. CAB international.
Sarwar, M., Kirkegaard, J.A., Wong, P.T.W., Desmarchelier, J.M., 1998. Biofumigation potential of brassicas - III. In vitro toxicity of isothiocyanates to soil-borne fungal pathogens.
Sarwar, M., Kirkegaard, J.A., 1998. Biofumigation potential of brassicas: II. Effect of environment and ontogeny on glucosinolate production and implications for screening. Plant and Soil 201, 91-101.
Sarwar, M., Kirkegaard, J. A., Wong, P. T. W., & Desmarchelier, J. (1998). Biofumigation potential of brassicas. Plant and Soil, 201(1), 103-112.
Strelnikov, E., Antonova, T., Gorlova, L., & Trubina, V. (2020). The environmentally safe method of control of broomrape (Orobanche cumana Wallr.) parasitizing on sunflower. In BIO Web of Conferences (Vol. 21, p. 00039). EDP Sciences

## Claims

1. Biocontrol liquid product consisting of a macerated aqueous extract obtained from cover crop plants of the *Brassicaceae* and/or *Fabaceae* families.

2. Biocontrol liquid product according to claim 1, wherein cover crop plants of the *Brassicaceae* or *Fabaceae* families are from the following species: brown mustard (*Brassica juncea*) and/or purple vetch (*Vicia benghalensis*).

3. Biocontrol liquid product according to claim 1 or 2, wherein plants have been harvested at flowering stage.

4. Process for obtaining a macerated aqueous extract according to anyone of claims 1 to 3, comprising the following steps:
a) grinding the harvested plants,
b) macerating said grinded material into water for a time period of at least 24 hours, at a temperature comprised between 20°C and 30°C, and
c) removing the solid parts of plants.

5. Process according to claim 4, wherein the step (a) leads to grinded material consisting essentially of particles of length inferior to 3 centimeters.

6. Process according to claim 4 or 5, wherein the step (b) of maceration is performed for about 64 hours, at a temperature comprised between 22°C and 26°C.

7. Use of a biocontrol liquid product according to anyone of claims 1 to 3, or as obtained by the process according to anyone of claims 4 to 6, in a biocontrol method.

8. Use according to claim 7, wherein the biocontrol method is intended for the biocontrol of parasites of sunflower.

9. Use according to claim 7, wherein the biocontrol method is intended for the biocontrol of broomrape (*Orobanche cumana*) parasitizing on sunflower.

10. Biocontrol method for the control of *Orobanche cumana* parasitizing on sunflower, comprising the spreading onto the field's soil of a biocontrol liquid product according to anyone of claims 1 to 3, or as obtained by the process of claims 4 to 6.

11. Biocontrol method according to claim 10, wherein the biocontrol liquid product is spread onto the field's soil before or at the same time than the sowing of sunflower seeds.
